# EUROPÄISCHE PATENTSCHRIFT

(11) **EP 1 146 104 B1**
(45) Veröffentlichungstag und Bekanntmachung des Hinweises auf die Patenterteilung: **16.06.2004**
(21) Anmeldenummer: 01107879.7
(22) Anmeldetag: 10.04.2001
(51) Int. Cl.: C09K 19/30, C09K 19/44

(54) **Flüssigkristallines Medium**
Liquid crystalline medium
Milieu liquide cristallin

(30) Priorität: 14.04.2000 DE 10018899
(43) Veröffentlichungstag der Anmeldung: 17.10.2001
(73) Patentinhaber: Merck Patent GmbH, 64293 Darmstadt (DE)
(72) Erfinder: Klasen, Melanie, Dr., 67259 Heuchelheim (DE); Weller, Clarissa, 64546 Mörfelden (DE); Tarumi, Kazuaki, Dr., 64342 Seeheim (DE); Bremer, Matthias, Dr., 64295 Darmstadt (DE)

(56) Entgegenhaltungen:
- DE-A- 19 927 627
- DATABASE WPI Section Ch, Week 199931 Derwent Publications Ltd., London, GB; Class E14, AN 1999-367335 XP002184743 & JP 11 140447 A (MERCK PATENT GMBH), 25. Mai 1999 (1999-05-25) -& US 6 066 268 A (MERCK PATENT) 23. Mai 2000 (2000-05-23)

## Beschreibung

Die Erfindung betrifft ein flüssigkristallines Medium auf der Basis eines Gemisches von polaren Verbindungen mit negativer dielektrischer Anisotropie, welches mindestens eine Verbindung der Formel I1, 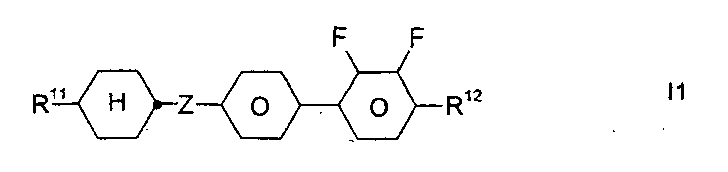 und mindestens eine Verbindung der Formel I2, 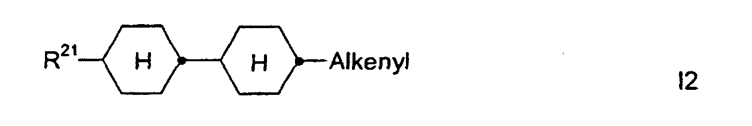 worin
- R¹¹, R¹² und R²¹: jeweils unabhängig voneinander, einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 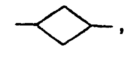 -C≡C-, -CO-, -CO-O-, -O-CO- oder -O-CO-O so ersetzt sein können, dass O-Atome nicht direkt miteinander verknüpft sind,
- Z: -C₂H₄-, -CH=CH-, -CF₂O-, -OCF₂- oder eine Einfachbindung, und
- Alkenyl: geradkettiger Alkenylrest mit 2-6 C-Atomen
bedeuten,
enthält,
dadurch gekennzeichnet, dass es mindestens eine Verbindung der Formel I2ab enthält 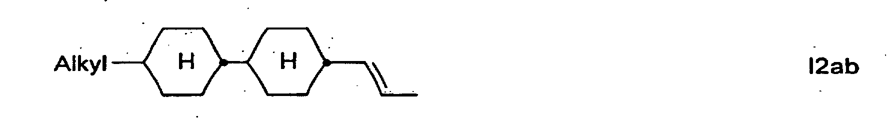 worin Alkyl ein geradkettiger Alkylrest mit 2-6 C-Atomen ist.

Derartige Medien sind insbesondere für elektrooptische Anzeigen mit einer Aktivmatrix-Addressierung basierend auf dem ECB-Effekt sowie für IPS-Anzeigen (In plane switching) zu verwenden.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε Werte -0,5 und -5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf. Auch bei Anzeigen, die den sogenannten IPS-Effekt verwenden, können dielektrisch negative Flüsigkristallmedien zum Einsatz kommen

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordemissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derärt angeordnet ist, dass je ein Filterelement einem schaltbaren Bildelement gegenüber liegt.

Die bisher bekannten TFT-Anzeigen arbeiten üblicherweise als TN-Zellen mit gekreuzten Polaristoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobiloder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Der Nachteil der bisher bekannten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Aus der EP 0 474 062 sind MFK-Anzeigen basierend auf dem ECB-Effekt bekannt Die dort beschriebenen FK-Mischungen basierend auf 2,3-Difluorphenyl-Derivaten, welche eine Ester-, Ether-oder Ethylbrücke enthalten, und weisen niedrige Werte der "voltage holding ratio" (HR) nach UV-Belastung auf.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können.

Der Erfindung liegt die Aufgabe zugrunde, MFK-Anzeigen welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen.

Es wurde nun gefunden, dass diese Aufgabe gelöst werden kann, wenn man in diesen Anzeigeelementen nematische Flüssigkristallmischungen verwendet, die mindestens eine Verbindung der Formel 11 und eine Verbindung der Formel I2 enthalten.

Gegenstand der Erfindung ist somit ein flüssigkristallines Medium auf der Basis eines Gemisches von polaren Verbindungen mit negativer dielektrischer Anisotropie, welches mindestens eine Verbindung der Formel I1 und mindestens eine Verbindung der Formel I2 enthält,
dadurch gekennzeichnet, dass es mindestens eine Verbindung der Formel I2ab enthält 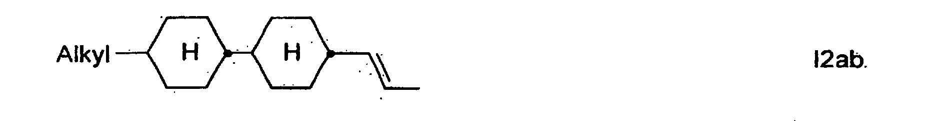 worin Alkyl ein geradkettiger Alkylrest mit 2-6 C-Atomen ist.

JP-A-11140447 beschreibt Mischungen enthaltend Alkenylverbindungen und 2,3-Difluorphenylverbindungen, offenbart jedoch keine Flüssigkristallmischungen gemäß Anspruch 1 der vorliegenden Erfindung enthaltend. Alkenylverbindungen der Formel I2ab.

Die erfindungsgemäße Mischung zeigt sehr günstige Werte für die kapazitive Schwelle, relativ hohe Werte für die Holding Ratio und gleichzeitig eine sehr gute Tieftemperaturstabilität.

Einige bevorzugte Ausführungsformen werden im folgenden genannt:
a) Medium, welches zusätzlich eine oder mehrere Verbindungen der Formel II enthält: 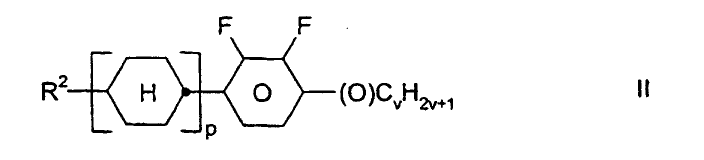 worin
   - R²: die Bedeutung von R¹¹, R¹² oder R²¹ hat,
   - p: 1 oder 2, und
   - v: 1 bis 6
   bedeutet.
b) Medium, welches zusätzlich eine oder mehrere Verbindungen der Formel III enthält: 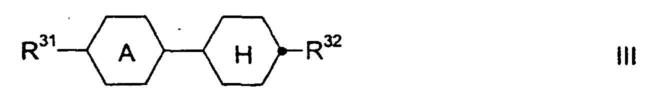 worin
   - R³¹ und R³²: jeweils unabhängig voneinander einen geradkettigen Alkyl- oder Alkoxyrest mit bis zu 12 C-Atomen, und 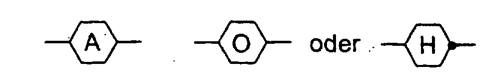
   bedeutet.
c) Medium, welches zwei, drei, vier oder mehr, vorzusgweise zwei, drei oder vier Verbindungen der Formel I1 enthält.
d) Medium, welches mindestens zwei Verbindungen der Formel I2 enthält.
e) Medium, wobei der Anteil an Verbindungen der Formel I1 im Gesamtgemisch mindestens 10 Gew.-%, vorzugsweise mindestens 20 Gew.-%, beträgt.
f) Medium, wobei der Anteil an Verbindungen der Formel I2 im Gesamtgemisch mindestens 5 Gew.-%, vorzugsweise mindestens 10 Gew.-%, beträgt.
g) Medium, wobei der Anteil an Verbindungen der Formel II im Gesamtgemisch mindestens 20 Gew.-% beträgt.
h) Medium, wobei der Anteil den Verbindungen der Formel III im Gesamtgemisch mindestens 5 Gew.-% beträgt.
i) Medium, welches mindestens eine Verbindung ausgewählt aus den Formeln I2a und/oder I2b enthält. 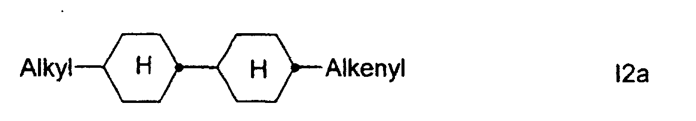 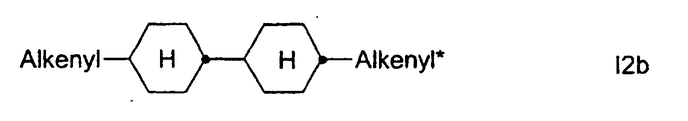
   Besonders bevorzugt sind die Verbindungen der Formeln I2aa-I2ad und I2ba-I2be: 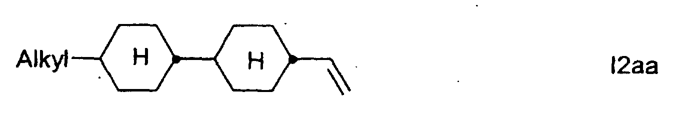 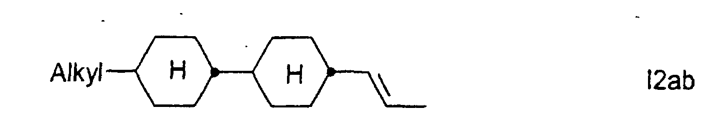 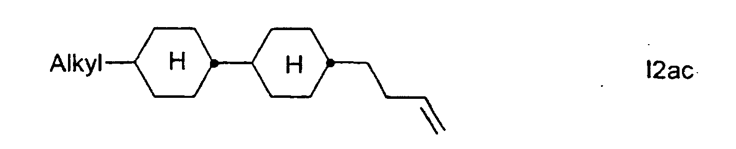 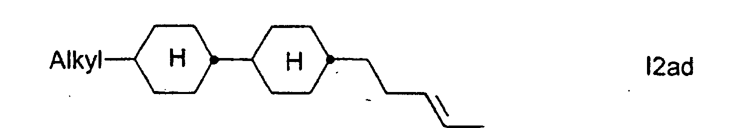 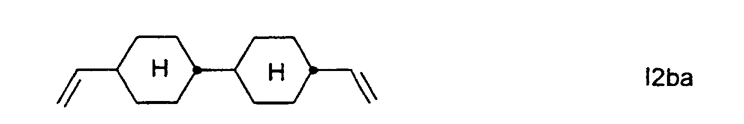 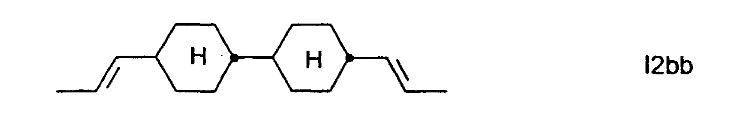 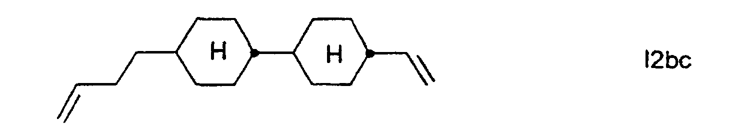 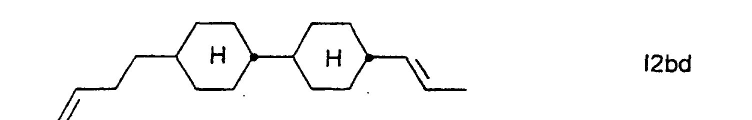 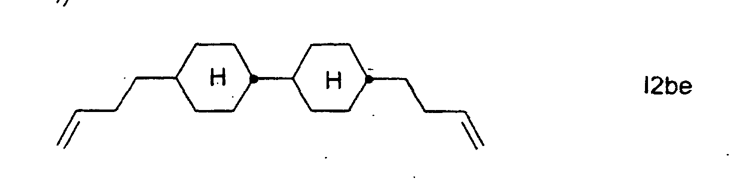 worin
   - Alkenyl und Alkenyl*: jeweils unabhängig voneinander ein geradkettiger Alkenylrest mit 2-6 C-Atomen, und
   - Alkyl: ein geradkettiger Alkylrest mit 1-6 C-Atomen
   bedeuten.
j) Medium, welches zusätzlich eine Verbindung ausgewählt aus den Formeln IIIa bis IIId enthält: 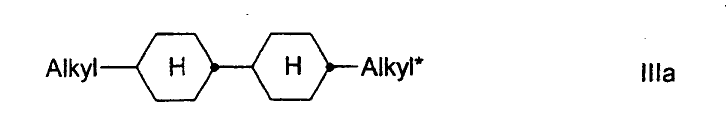 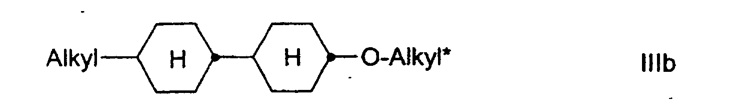 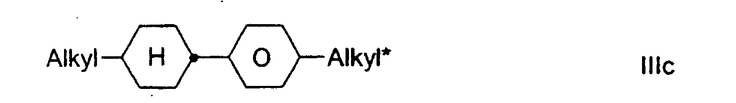 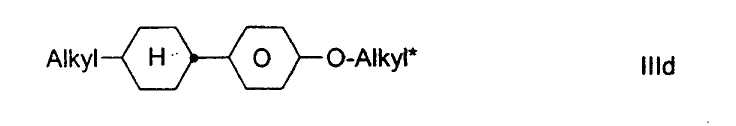 worin
   - Alkyl und Alkyl*: jeweils unabhängig voneinander einen geradkettigen Alkylrest mit 1-6 C-Atomen,
   bedeuten.
   Vorzugsweise enthält das erfindungsgemäße Medium mindestens - eine Verbindung der Formel IIIa und/oder Formel IIIb.
k) Medium, welches im wesentlichen aus:
   - 10-40 Gew.-%: einer oder mehrerer Verbindungen der Formel I1,
   - 5-30 Gew.-%: einer oder mehrerer Verbindungen der Formel I2 und
   - 20-70 Gew.-%: einer oder mehrerer Verbindungen der Formel II
   besteht.
l) Medium, welches zusätzlich eine oder mehrere Verbindungen der Formeln 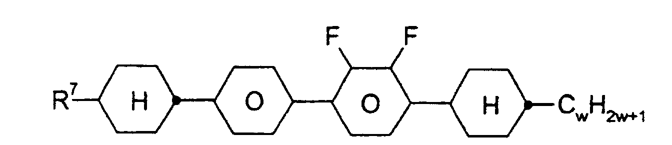 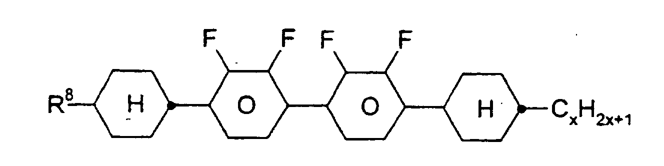 worin
   - R⁷ und R⁸: jeweils unabhängig voneinander eine der in Anspruch 1 für R¹¹, R¹² und R²¹ angegebenen Bedeutung haben, und
   - w und x: jeweils unabhängig voneinander 1 bis 6
   bedeuten,
   enthält.
m) Medium, welches zusätzlich eine oder mehrere Verbindungen der Formeln 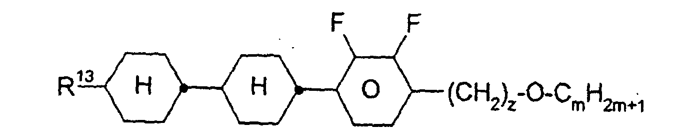 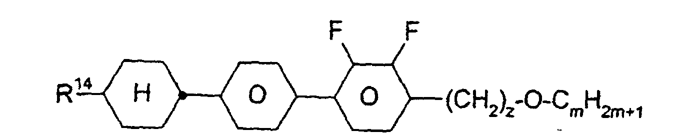 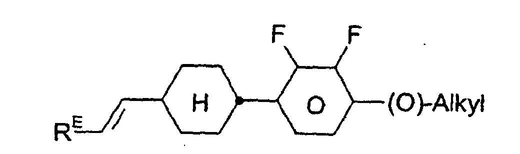 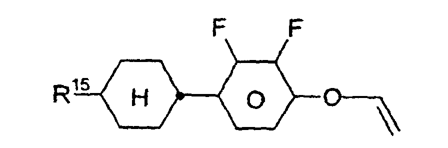 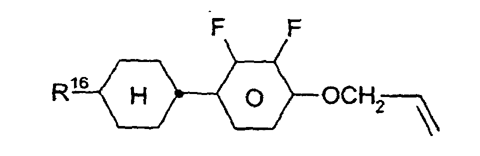 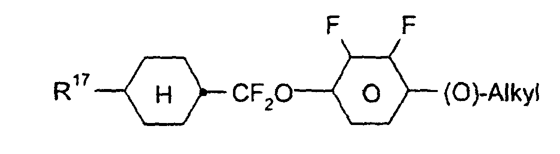 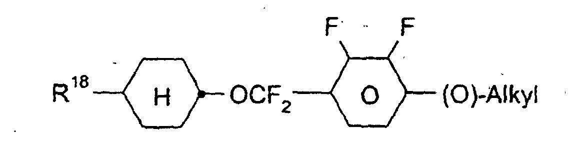 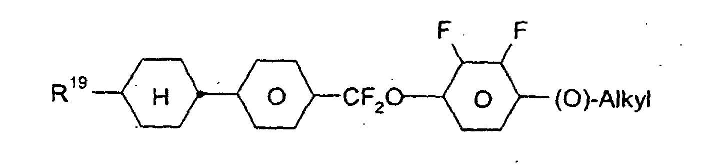 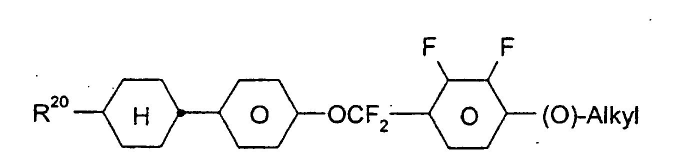 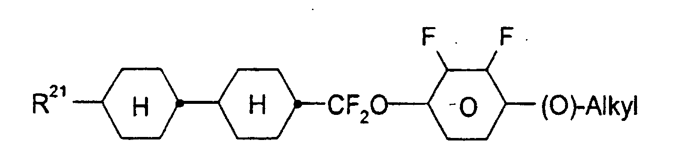 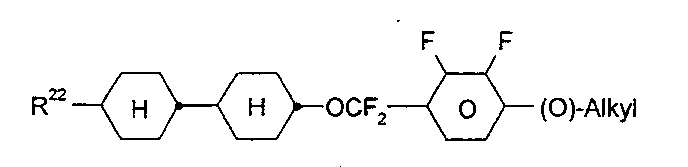 enthält,
   worin R¹³-R²² jeweils unabhängig voneinander, die für R¹¹, R¹² oder R²¹ angegebenen Bedeutungen haben und z und m jeweils unabhängig voneinander 1-6 bedeuten. R^{E} bedeutet H, CH₃, C₂H₅ oder n-C₃H₇.
n) Medium, worin die Verbindung der Formel I1 ausgewählt ist aus der Gruppe I1a bis I1g: 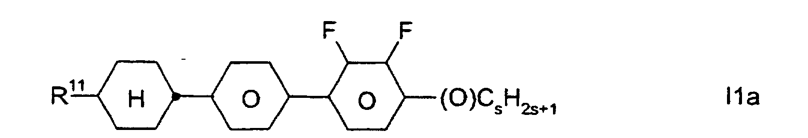 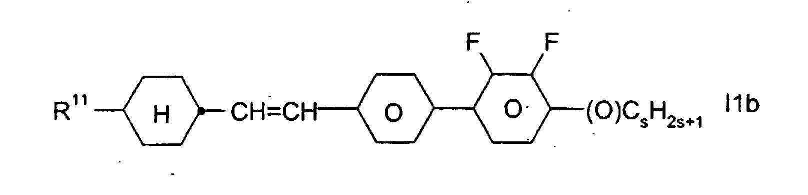 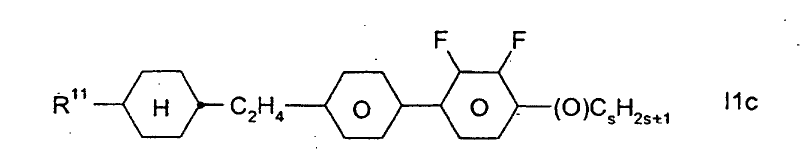 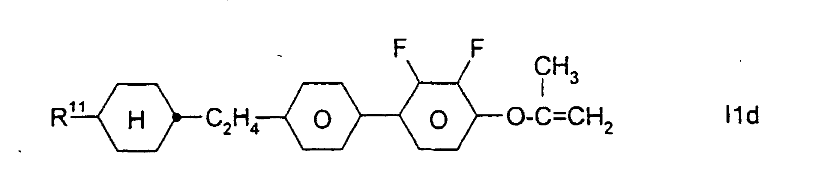 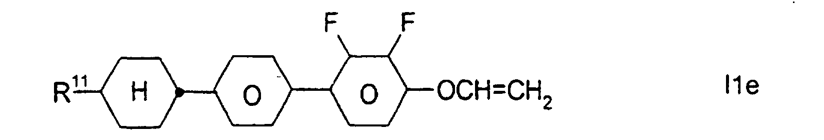 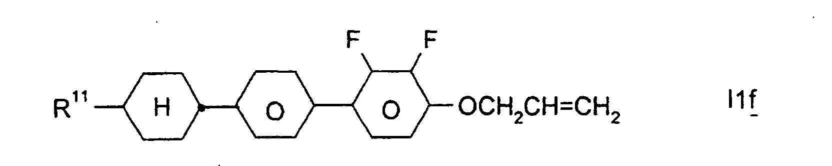 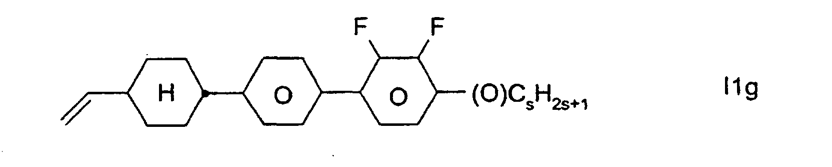 worin R¹¹ die in Anspruch 1 angegebene Bedeutung hat, und s 1-12 ist. Vorzugsweise bedeutet R¹¹ geradkettiges Alkyl mit 1 bis 6 C-Atomen, Vinyl, 1E-Alkenyl oder 3E-Alkenyl.
o) Medium enthaltend ein oder mehrere Verbindungen der Formel I1a und/oder I1g.
p) Medium enthaltend zusätzlich ein oder mehrere Verbindungen der Formel. 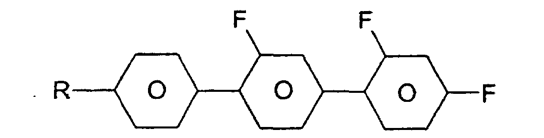 worin R Alkyl, Alkenyl, Alkoxy, Alkenyloxy mit 1 bzw. 2 bis 6 C-Atomen bedeutet.

Ein weiterer Gegenstand der Erfindung ist eine elektrooptische Anzeige mit einer Aktivmatrix-Addressierung basierend auf dem ECB-Effekt, dadurch gekennzeichnet, dass sie als Dielektrikum ein flüssigkristallines Medium nach einem der Ansprüche 1 bis 12 enthält.

Vorzugsweise weist die Flüssigkristallmischung einen nematischen Phasenbereich von mindestens 60 K und eine Fließviskosität ν₂₀ von maximal 30 mm² · s⁻¹ bei 20 °C auf.

Die erfindungsgemäße Flüssigkristallmischung weist ein Δε von etwa -0,5 bis -6,0, insbesondere von etwa -3,0 bis -4,5 auf, wobei Δε die dielektrische Anisotropie bedeutet.
Die Rotationsviskosität γ₁ ist vorzugsweise < 225 mPa·s, insbesondere < 180 mPa·s.

Die Doppelbrechung Δn in der Flüssigkristallmischung liegt, in der Regel, zwischen 0,04 und 0,13, vorzugsweise zwischen 0,06 und 0,11 und/oder die Dielektrizitätskonstante ε_{II} größer oder gleich 3, vorzugsweise 3,2 bis 8,5.

Die Dielektrika können auch weitere, dem Fachmann bekannte und in der Literatur beschriebenen Zusätze enthalten.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethem (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

Die einzelnen Komponenten der Formel I1, I2, II und III der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,3. Sie enthält bevorzugt Verbindungen der Formeln I1 und II.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm^{2 ·} s⁻¹, vorzugsweise nicht mehr als 25 mm^{2 ·} s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm^{2 ·} s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel III.

Daneben können diese Flüssigkristallphasen auch mehr als 18 Komponenten, vorzugsweise 18 bis 25 Komponenten, enthalten.

Vorzugsweise enthalten die Phasen 4 bis 15, insbesondere 5 bis 12, Verbindungen der Formeln I1, 12, II und optional III.

Neben Verbindungen der Formeln I1, I2, II und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,
- G: -CH=CH- -N(O)=N-
-CH-CQ- -CH=N(O)-
-C≡C- -CH₂-CH₂-
-CO-O- -CH₂-O-
-CO-S- -CH₂-S-
-CH=N- -COO-Phe-COO-
oder eine C-C-Einfachbindung, Q Halogen, vorzugsweise Chlor, oder -CN, und R⁹ und R¹⁰ jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße ECB-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-OS 0 240 379, beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Vorzugsweise enthalten die erfindungsgemäßen Mischungen neben den Verbindungen der Formeln I1 und I2 eine oder mehrere Verbindungen der nachfolgend genannten Verbindungen.

Folgende Abkürzungen werden verwendet:
(n, m = 1-6; z = 1-6)

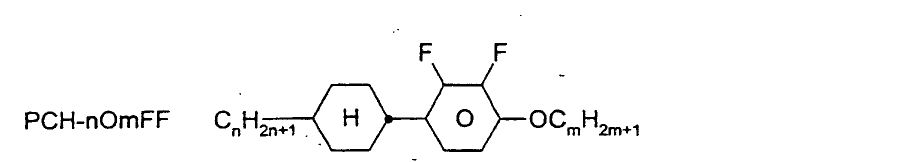

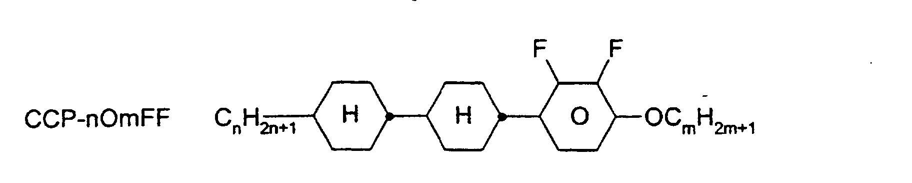

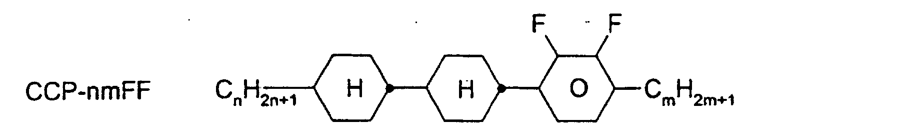

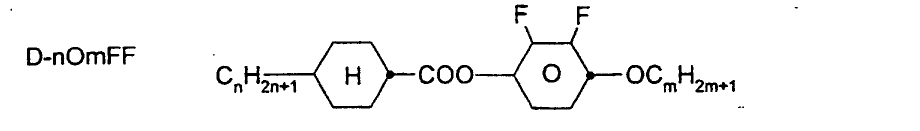

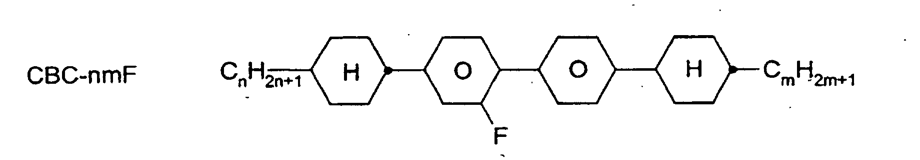

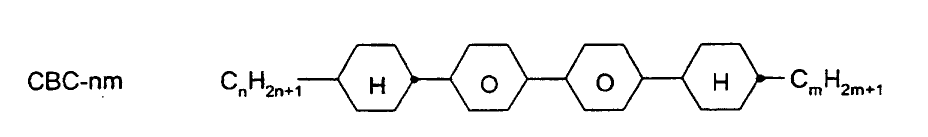

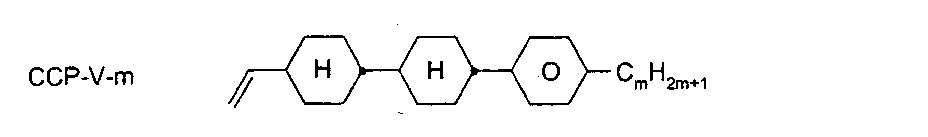

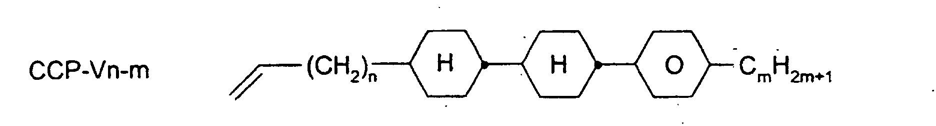

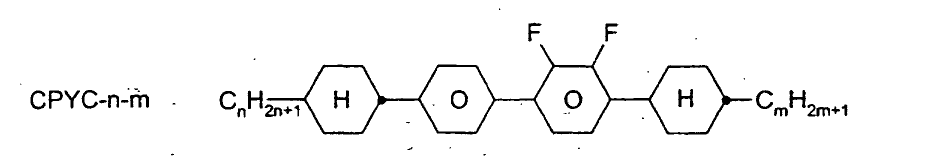

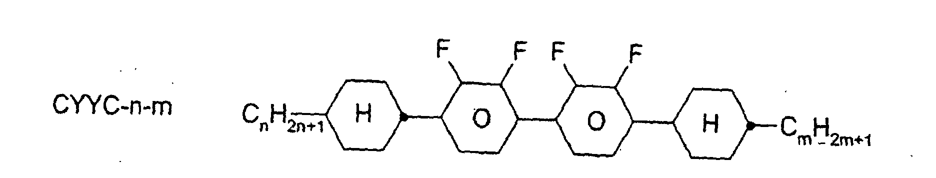

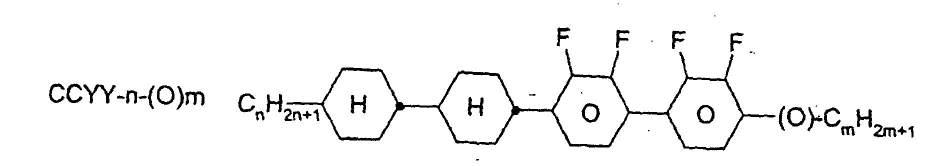

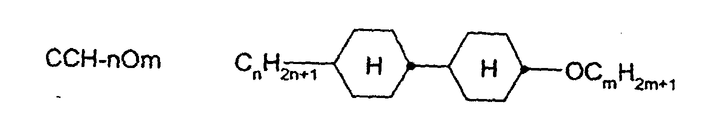

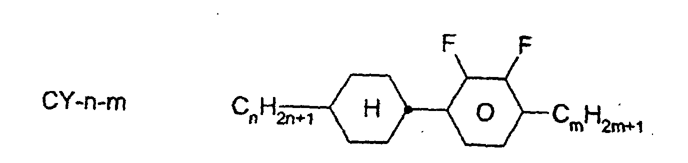

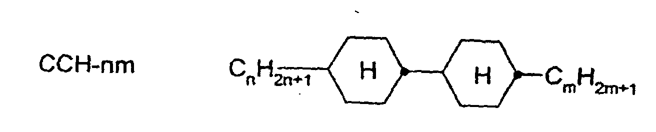

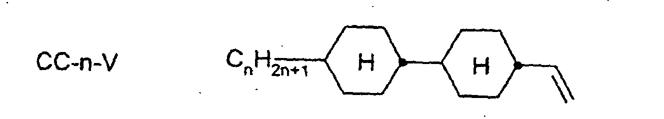

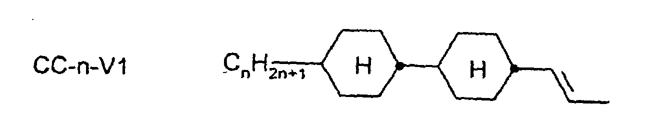

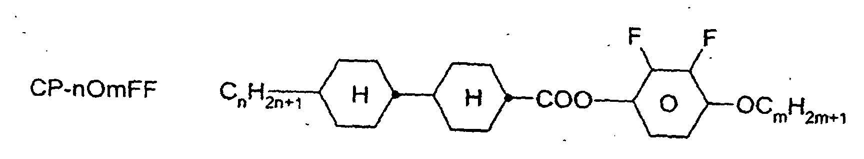

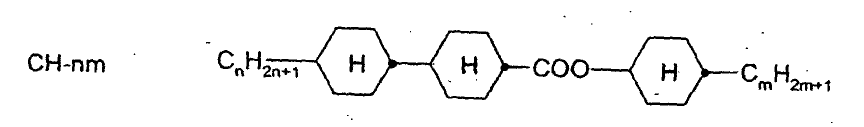

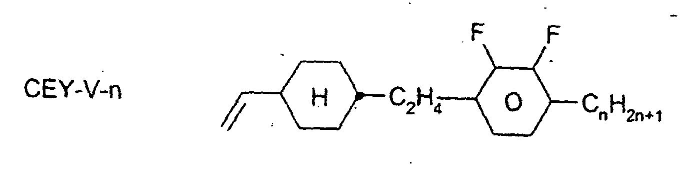

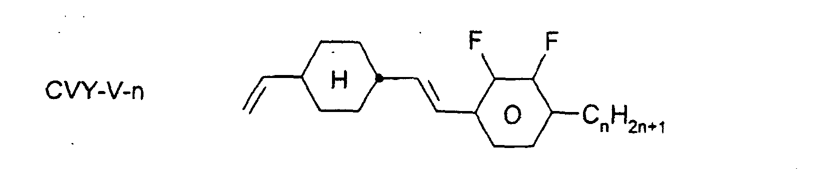

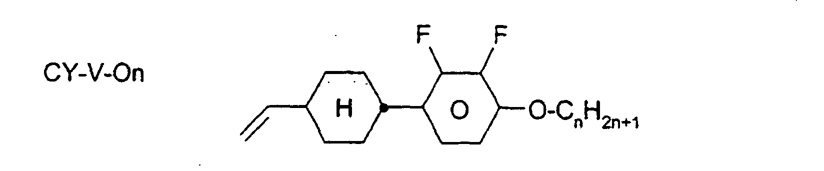

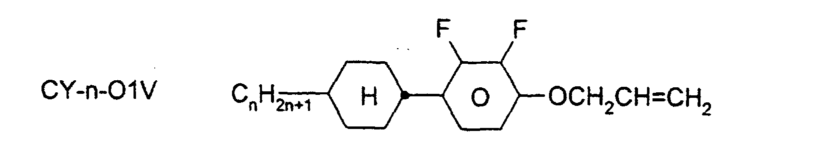

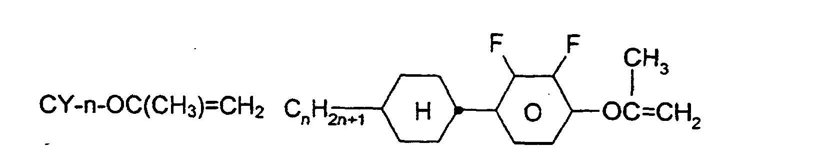

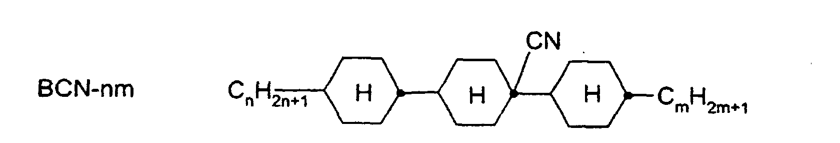

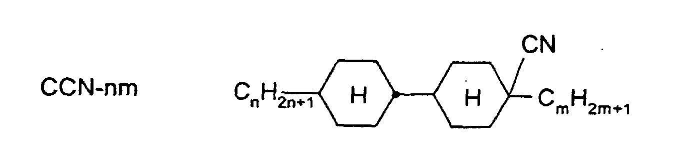

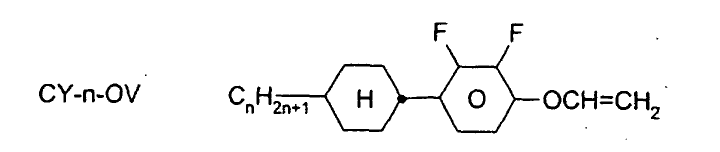

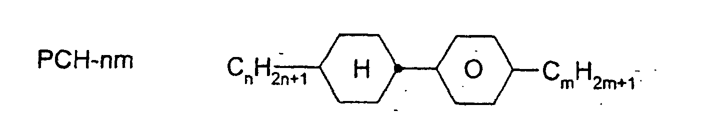

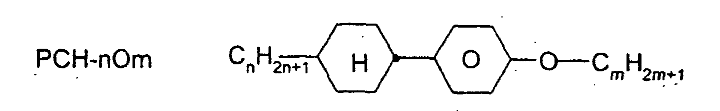

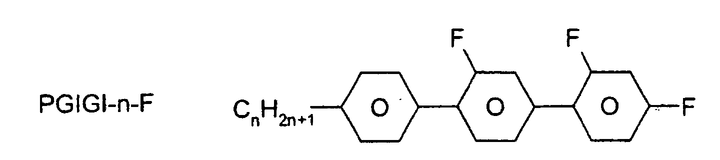

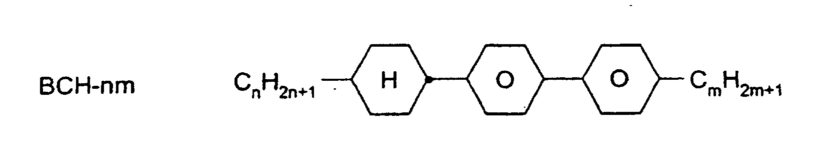

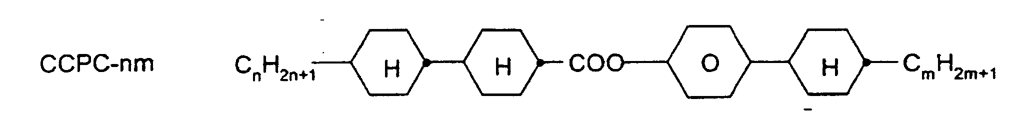

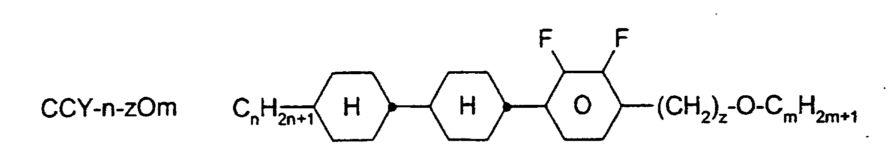

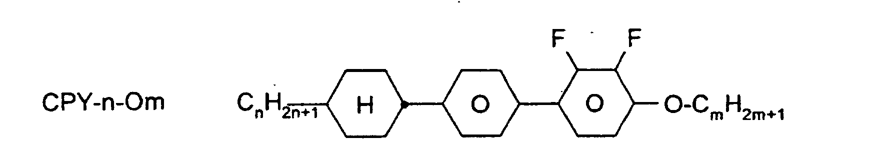

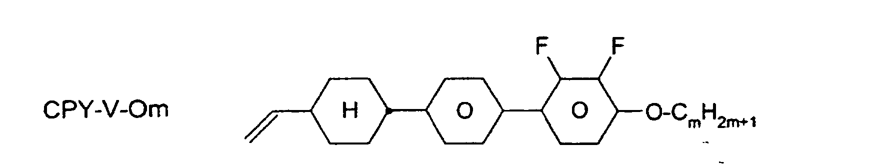

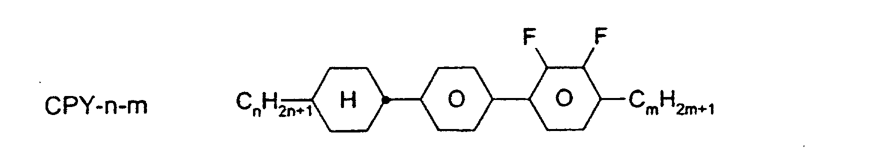

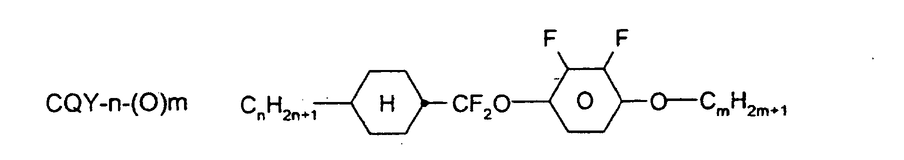

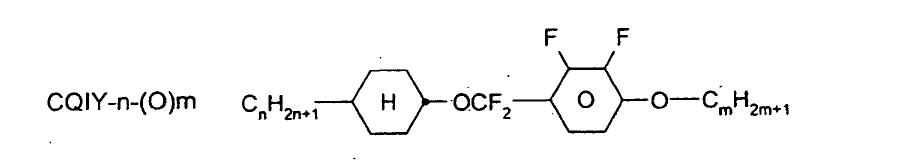

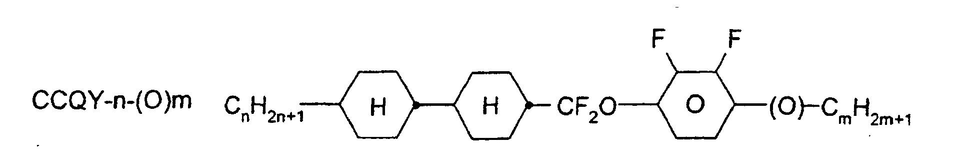

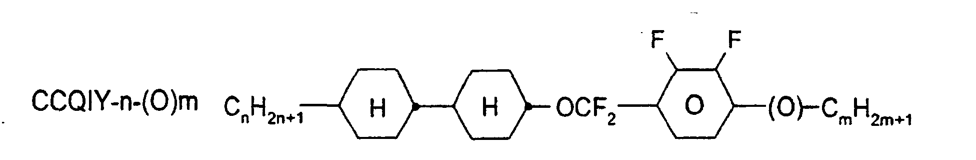

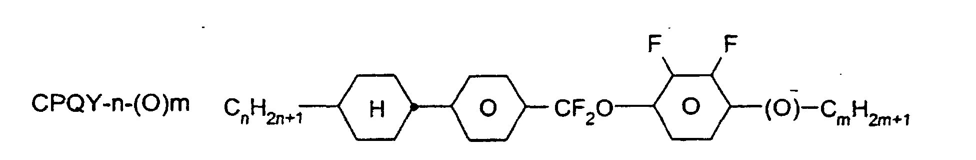

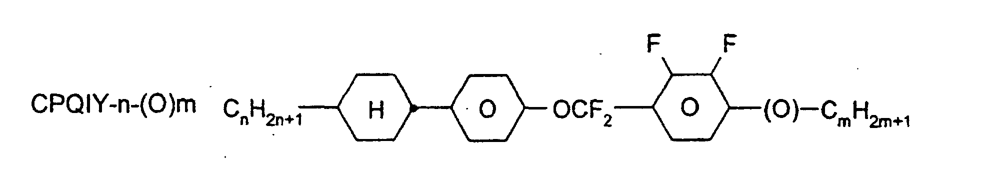

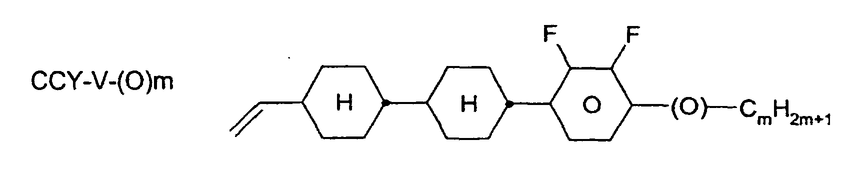

Weiterhin bedeuten:
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- γ₁: Rotationsviskosität gemessen bei 20 °C [mPa·s]
- LTS: Low temperature stability

Die zur Messung der Schwellspannung verwendete Anzeige weist zwei planparallele Trägerplatten im Abstand von 5 µm und Elektrodenschichten mit darüberliegenden Orientierungsschichten aus Lecithin auf den Innenseiten der Trägerplatten auf, welche eine homeotrope Orientierung der Flüssigkristalle bewirken.

### Mischungsbeispiele

### Beispiel 1

| | | | |
|---|---|---|---|
| PCH-304FF | 18,0 % | S→N | < - 40 °C |
| PCH-504FF | 19,0 % | Klärpunkt [°C] | 69,5 |
| BCH-32 | 8,0 % | Δn [589 nm, 20 °C] | +0,1011 |
| CCP-V-1 | 7,0 % | Δε [1 kHz, 20 °C] | -3,3 |
| CC-3-V1 | 8,0 % | ε_{II} [1 kHz, 20 °C] | 3,6 |
| CC-5-V | 18,0 % | γ₁ [mPa·s, 20 °C] | 115 |
| CPY-2-02 | 12,0 % | Vₒ[V] | 2,10 |
| CPY-3-02 | 10,0 % | LTS in Zellen | nem. > 1000 h |
| | | bei - 20 °C, - 30 °C, - 40 °C | |

### Beispiel 2

| | | | |
|---|---|---|---|
| PCH-304FF | 19,0 % | S→N | < - 40 °C |
| PCH-504FF | 20,0 % | Klärpunkt [°C] | 71,0 |
| CCP-302FF | 6,0 % | Δn [589 nm, 20 °C] | +0,1020 |
| BCH-32 | 7,0 % | Δε [1 kHz, 20 °C] | -3,9 |
| CCH-35 | 5,0 % | ε_{II} [1 kHz, 20 °C] | 3,7 |
| CC-3-V1 | 8,0 % | γ₁ [mPa·s, 20 °C] | 142 |
| CC-5-V | 11,0 % | Vₒ[V] | 1,92 |
| CPY-2-02 | 12,0 % | LTS in Zellen | nem. > 1000 h |
| CPY-3-02 | 12,0 % | bei - 20 °C und - 30 °C | |

### Beispiel 3

| | | | |
|---|---|---|---|
| PCH-304FF | 10,0 % | S→N | < - 30 °C |
| PCH-502FF | 8,0 % | Klärpunkt [°C] | 75,5 |
| PCH-504FF | 18,0 % | Δn [589 nm, 20 °C] | +0,1005 |
| CCP-302FF | 10,0 % | Δε [1 kHz, 20 °C] | -4,2 |
| CC-3-V1 | 8,0 % | ε_{II} [1 kHz, 20 °C] | 3,7 |
| CC-5-V | 13,0 % | γ₁ [mPa·s, 20 °C] | 149 |
| CCH-35 | 5,0 % | Vₒ[V] | 1,95 |
| CPY-2-02 | 12,0 % | | |
| CPY-3-02 | 12,0 % | | |
| BCH-32 | 4,0 % | | |

### Beispiel 4

| | | | |
|---|---|---|---|
| PCH-304FF | 8,0 % | S→N | < - 30 °C |
| PCH-502FF | 8,0 % | Klärpunkt [°C] | 83,5 |
| PCH-504FF | 18,0 % | Δn [589 nm, 20 °C] | +0,1022 |
| CCP-302FF | 14,0 % | Δε [1 kHz, 20 °C] | -4,9 |
| CCP-31FF | 7,0 % | ε_{II} [1 kHz, 20 °C] | 3,8 |
| CC-5-V | 8,0 % | γ₁ [mPa·s, 20 °C] | 189 |
| CC-3-V1 | 8,0 % | Vₒ[V] | 1,93 |
| CCH-35 | 5,0 % | | |
| CPY-2-02 | 12,0 % | | |
| CPY-3-02 | 12,0 % | | |

### Beispiel 5

| | | | |
|---|---|---|---|
| PCH-304FF | 11,0 % | S→N | < - 30 °C |
| PCH-504FF | 16,0 % | Klärpunkt [°C] | 83,5 |
| CC-5-V | 12,0 % | Δn [589 nm, 20 °C] | +0,1006 |
| PCH-302 | 6,0 % | Δε [1 kHz, 20 °C] | -3,7 |
| CCH-35 | 5,0 % | ε_{II} [1 kHz, 20 °C] | 3,5 |
| CC-3-V1 | 8,0 % | γ₁ [mPa·s, 20 °C] | 150 |
| CPY-2-02 | 12,0 % | Vₒ[V] | 2,23 |
| CPY-3-02 | 12,0 % | | |
| CCP-302FF | 11,0 % | | |
| CCP-V2-1 | 7,0 % | | |

### Beispiel 6

| | | | |
|---|---|---|---|
| PCH-502FF | 8,0 % | S→N | < - 30 °C |
| PCH-504FF | 16,0 % | Klärpunkt [°C] | 70,5 |
| PCH-301 | 9,0 % | Δn [589 nm, 20 °C] | +0,1007 |
| CCP-V2-1 | 5,0 % | Δε [1 kHz, 20 °C] | -4,2 |
| CC-3-V1 | 9,0 % | εₗₗ [1 kHz, 20 °C] | 3,9 |
| CCH-35 | 5,0 % | γ₁ [mPa·s, 20 °C] | 139 |
| CC-5-V | 6,0 % | Vₒ[V] | 1,96 |
| D-302-FF | 8,0 % | | |
| D-502FF | 8,0 % | | |
| CPY-2-02 | 14,0 % | | |
| CPY-3-02 | 12,0 % | | |

### Beispiel 7

| | | | |
|---|---|---|---|
| PCH-304FF | 14,0 % | S→N | < - 30 °C |
| PCH-502FF | 7,0 % | Klärpunkt [°C] | 80,5 |
| PCH-504FF | 18,0 % | Δn [589 nm, 20 °C] | +0,1006 |
| CC-5-V | 8,0 % | Δε [1 kHz, 20 °C] | -4,9 |
| CC-3-V1 | 8,0 % | εₗₗ [1 kHz, 20 °C] | 3,8 |
| CCH-35 | 5,0 % | γ₁ [mPa·s, 20 °C] | 186 |
| CPY-2-02 | 12,0 % | Vₒ[V] | 1,89 |
| CPY-3-02 | 12,0 % | | |
| CCP-302FF | 13,0 % | | |
| CCPC-33 | 3,0 % | | |

### Beispiel 8

| | | | |
|---|---|---|---|
| PCH-304FF | 14,0 % | S→N | < - 30 °C |
| PCH-502FF | 10,0% | Klärpunkt [°C] | 80,0 |
| PCH-504FF | 17,0 % | Δn [589 nm, 20 °C] | +0,1104 |
| CCH-35 | 5,0 % | Δε [1 kHz, 20 °C] | -5,1 |
| CC-3-V1 | 9,0 % | ε_{II} [1 kHz, 20 °C] | 3,8 |
| BCH-32 | 6,0 % | γ₁ [mPa.s, 20 °C] | 202 |
| CPY-2-02 | 13,0 % | Vₒ [V] | 1,83 |
| CPY-3-02 | 12,0 % | | |
| CCP-302FF | 14,0 % | | |

### Beispiel 9

| | | | |
|---|---|---|---|
| PCH-304FF | 14,0 % | S→N | < - 30 °C |
| PCH-502FF | 8,0 % | Klärpunkt [°C] | 70,0 |
| PCH-504FF | 15,0 % | Δn [589 nm, 20 °C] | +0,0906 |
| CCP-302FF | 8,0% | Δε [1 kHz, 20 °C] | -3,7 |
| CPY-2-02 | 9,0 % | ε_{II} [1 kHz, 20 °C] | 3,6 |
| CPY-3-02 | 10.0% | γ₁ [mPa·s, 20 °C] | 119 |
| CCP-V2-1 | 5,0 % | Vₒ[V] | 2,03 |
| CC-3-V1 | 8,0 % | | |
| CCH-35 | 5,0 % | | |
| CC-5-V | 18,0 % | | |

### Beispiel 10

| | | | |
|---|---|---|---|
| PCH-304FF | 15,0 % | S→N | < - 30 °C |
| PCH-504FF | 15,0 % | Klärpunkt [°C] | 79,0 |
| CCH-35 | 5,0 % | Δn [589 nm, 20 °C] | + 0,1122 |
| CC-5-V | . 12,0 % | Δε [1 kHz, 20 °C] | - 3,7 |
| CC-3-V1 | 10,0 % | ε_{II} [1 kHz, 20 °C] | 3,6 |
| BCH-32 | 8,0 % | Vₒ[V] | 2,04 |
| CPY-2-02 | 10,0 % | γ₁ [mPas, 20 °C] | 145 |
| CPY-3-02 | 7,0 % | | |
| CPY-V-02 | 10,0 % | | |
| CPY-V-04 | 8,0 % | | |

### Beispiel 11

| | | | |
|---|---|---|---|
| PCH-304FF | 10,0 % | S→N | < - 30 °C |
| PCH-504FF | 16,0 % | Klärpunkt [°C] | 80,0 |
| CCH-35 | 5,0 % | Δn [589 nm, 20 °C] | + 0,1021 |
| CC-5-V | 20,0 % | Δε [1 kHz, 20 °C] | - 3,5 |
| CC-3-V1 | 10,0 % | ε_{II} [1 kHz, 20 °C] | 3,5 |
| BCH-32 | 3,0 % | Vₒ[V] | 2,17 |
| CPY-2-02 | 10,0 % | γ₁ [mPas, 20 °C] | 131 |
| CPY-3-02 | 10,0 % | LTS in Zellen | nem. > 1000 h |
| CPY-V-02 | 10,0 % | bei - 20 °C, - 30 °C | |
| CCP-302FF | 6,0 % | | |

### Beispiel 12

| | | | |
|---|---|---|---|
| PCH-304FF | 14,0 % | S→N | < - 30 °C |
| PCH-504FF | 15,0 % % | Klärpunkt [°C] | 84,0 |
| CCY-V-02 | 10,0 % | Δn [589 nm, 20 °C] | + 0,1140 |
| CPY-3-1 | 9,0 % | Δε [1 kHz, 20 °C] | - 4,8 |
| CC-3-V1 | 10.0% | ε_{II} [1 kHz, 20 °C] | 3,8 |
| CCH-35 | 5,0 % | Vₒ[V] | 1,94 |
| CC-5-V | 7,0 % | γ₁ [mPa·s, 20 °C] | 183 |
| CPY-V-02 | 10,0 % | LTS in Zellen | nem. > 1000 h |
| CPY-2-02 | 10,0 % | bei - 20 °C | |
| CPY-3-02 | 10,0 % | | |

### Beispiel 13

| | | | |
|---|---|---|---|
| PCH-304FF | 20,0 % | S→N | < - 40 °C |
| PCH-504FF | 16,0 % | Klärpunkt [°C] | 69,0 |
| BCH-32 | 8,0 % | Δn [589 nm, 20 °C] | + 0,0978 |
| CCP-V-1 | 8,0 % | Δε [1 kHz, 20 °C] | - 3,0 |
| CC-3-V1 | 8,0 % | ε_{II} [1 kHz, 20 °C] | 3,6 |
| CC-5-V | 20,0 % | Vₒ[V] | 2,17 |
| CPY-2-02 | 10,0 % | γ₁ [mPa·s, 20 °C] | 108 |
| CPY-3-02 | 10,0 % | LTS in Zellen | nem. > 1000 h |
| | | bei - 20 °C, - 30 °C, - 40 °C | |

### Beispiel 14

| | | | |
|---|---|---|---|
| PCH-304FF | 16,0 % | S→N | < - 30 °C |
| PCH-504FF | 18,0 % | Klärpunkt [°C] | 73,5 |
| CCP-302FF | 6,0 % | Δn [589 nm, 20 °C] | + 0,0883 |
| CPY-2-02 | 6,0 % | Δε [1 kHz, 20 °C] | -3,1 |
| CPY-3-02 | 11,0 % | ε_{II} [1 kHz, 20 °C] | 3,4 |
| CCP-V2-1 | 10,0 % | Vₒ[V] | 2,26 |
| CC-3-V1 | 8,0 % | γ₁ [mPa·s, 20 °C] | 113 |
| CCH-35 | 5,0 % | LTS in Zellen | nem. > 1000 h |
| CC-5-V | 20,0 % | bei - 20 °C und - 30 °C | |

### Beispiel 15

| | | | |
|---|---|---|---|
| PCH-304FF | 13,0 % | Klärpunkt [°C] | 70 |
| PCH-502FF | 8,0 % | Δn [589 nm, 20 °C] | + 0,0986 |
| PCH-504FF | 11,0 % | Δε [1 kHz, 20 °C] | -3,2 |
| CPY-3-02 | 10,0 % | ε_{II} [1 kHz, 20 °C] | 3,6 |
| CPQIY-3-02 | 5,0 % | Vₒ[V] | 2,12 |
| CPQIY-3-04 | 5,0 % | γ₁ [mPa·s, 20 °C] | 116 |
| CPY-2-02 | 9,0 % | | |
| BCH-32 | 8,0 % | | |
| CC-3-V1 | 8,0 % | | |
| CCH-35 | 5,0 % | | |
| CC-5-V | 18,0 % | | |

### Beispiel 16

| | | | |
|---|---|---|---|
| PCH-304FF | 16,0 % | Klärpunkt [°C] | 70,5 |
| PCH-502FF | 8,0 % | Δn [589 nm, 20 °C] | + 0,0954 |
| PCH-504FF | 12,0 % | Δε [1 kHz, 20 °C] | -3,4 |
| CPY-3-02 | 8,0 % | ε_{II} [1 kHz, 20 °C] | 3,6 |
| CCQY-3-02 | 5,0 % | Vₒ[V] | 2,08 |
| CCQY-5-02 | 5,0 % | γ₁ [mPa·s, 20 °C] | 122 |
| CPY-2-02 | 9,0 % | | |
| BCH-32 | 8,0 % | | |
| CC-3-V1 | 8,0 % | | |
| CCH-35 | 5,0 % | | |
| CC-5-V | 16,0% | | |

### Beispiel 17

| | | | |
|---|---|---|---|
| PCH-304FF | 8,0 % | Klärpunkt [°C] | 70,0 |
| PCH-502FF | 10,0 % | Δn [589 nm, 20 °C] | + 0,1023 |
| PCH-504FF | 14,0 % | Δε [1 kHz, 20 °C] | -3,3 |
| CPY-3-02 | 12,0 % | ε_{II} [1 kHz, 20 °C] | 3,6 |
| CQY-5-1 | 5,0 % | Vₒ[V] | 2,14 |
| CQY-5-02 | 5,0 % | γ₁ [mPa·s, 20 °C] | 104 |
| CPY-3-04 | 12,0 % | | |
| BCH-32 | 9,0 % | | |
| CC-3-V1 | 10,0 % | | |
| CCH-35 | 5,0 % | | |
| CC-5-V | 10,0 % | | |

### Beispiel 18

| | | | |
|---|---|---|---|
| PCH-304FF | 11,0 % | Klärpunkt [°C] | 69,5 |
| PCH-502FF | 9,0 % | Δn [589 nm, 20 °C] | + 0,0952 |
| PCH-504FF | 16,0 % | Δε [1 kHz, 20 °C] | -3,6 |
| CPQIY-3-02 | 8,0 % | ε_{II} [1 kHz, 20 °C] | 3,6 |
| CPY-2-04 | 10,0 % | Vₒ[V] | 2,08 |
| CPY-3-02 | 11,0 % | γ₁ [mPa·s, 20 °C] | 120 |
| CCPC-33 | 3,0 % | | |
| CC-3-V1 | 8,0 % | | |
| CCH-35 | 5,0 % | | |
| CC-5-V | 19,0 % | | |

### Beispiel 19

| | | | |
|---|---|---|---|
| PCH-304FF | 13,0 % | Klärpunkt [°C] | 70,5 |
| PCH-502FF | 8,0 % | Δn [589 nm, 20 °C] | + 0,0900 |
| PCH-504FF | 16,0 % | Δε [1 kHz. 20 °C] | -3,7 |
| CCQY-3-02 | 8,0 % | ε_{II} [1 kHz, 20 °C] | 3,6 |
| CPY-2-02 | 10,0 % | Vₒ[V] | 2,06 |
| CPY-3-02 | 10,0 % | γ₁ [mPa·s, 20 °C] | 119 |
| CCP-V2-1 | 4,0 % | | |
| CC-3-V1 | 8,0 % | | |
| CCH-35 | 5,0 % | | |
| CC-5-V | 18,0 % | | |

## Patentansprüche

1. Flüssigkristallines Medium auf der Basis eines Gemisches von polaren Verbindungen mit negativer dielektrischer Anisotropie, welches mindestens eine Verbindung der Formel I1 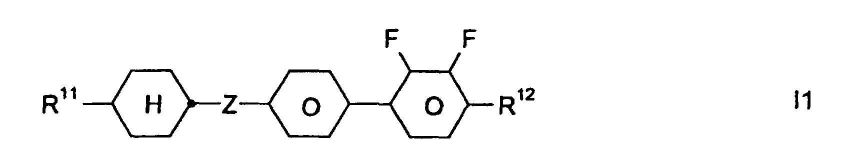 und mindestens eine Verbindung der Formel 12 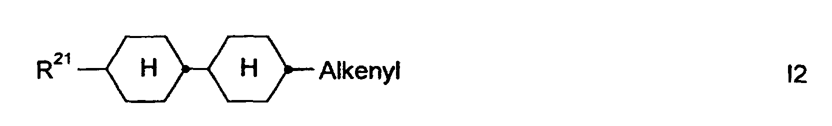 worin
R¹¹, R¹² und R²¹ jeweils unabhängig voneinander einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen jeweils unabhängig voneinander durch -O-, -S-, 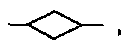 -C≡C-, - CO-, -CO-O-, -O-CO- oder -O-CO-O- so ersetzt sein können, dass O-Atome nicht direkt miteinander verknüpft sind,
Z -C₂H₄-, -CH=CH-, -CF₂O-, -OCF₂- oder eine Einfachbindung, und
Alkenyl ein geradkettiger Alkenylrest mit 2-6 C-Atomen
bedeuten,
enthält,
**dadurch gekennzeichnet, dass** es mindestens eine Verbindung der Formel I2ab enthält 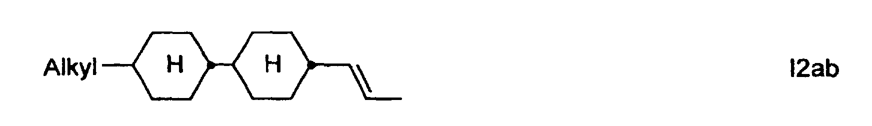 worin Alkyl ein geradkettiger Alkylrest mit 2-6 C-Atomen ist.

2. Medium nach Anspruch 1, **dadurch gekennzeichnet, dass** es zusätzlich eine oder mehrere Verbindungen der Formel II 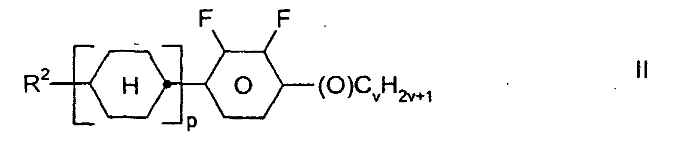 worin
R² die für R¹¹, R¹² und R²¹ angegebene Bedeutung besitzt,
p 1 oder 2, und
v 1 bis 6
bedeutet,
enthält.

3. Medium nach Anspruch 1 oder 2, **dadurch gekennzeichnet, dass** es zusätzlich eine oder mehrere Verbindungen der Formel III enthält: 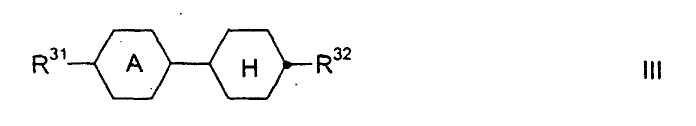 worin
R³¹ und R³² jeweils unabhängig voneinander einen geradkettigen Alkyl- oder Alkoxyrest mit 1-12 C-Atomen bedeuten, und 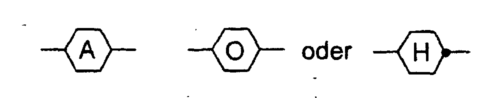 bedeutet.

4. Medium nach mindestens einem der Ansprüche 1 bis 3, **dadurch gekennzeichnet, dass** es aus drei, vier oder mehr Verbindungen ausgewählt aus den Formeln 11 und 12 besteht.

5. Medium nach einem der Ansprüche 1 bis 4, **dadurch gekennzeichnet, dass** der Anteil an Verbindungen der Formel 11 im Gesamtgemisch mindestens 10 Gew.-% beträgt.

6. Medium nach einem der Ansprüche 1 bis 5, **dadurch gekennzeichnet, dass** der Anteil an Verbindungen der Formel I2 im Gesamtgemisch mindestens 5 Gew.-% beträgt.

7. Medium nach einem der Ansprüche 1 bis 6, **dadurch gekennzeichnet, dass** der Anteil an Verbindungen der Formel II im Gesamtgemisch mindestens 20 Gew.-% beträgt.

8. Medium nach einem der Ansprüche 1 bis 7, **dadurch gekennzeichnet, dass** der Anteil an Verbindungen der Formel III im Gesamtgemisch mindestens 5 Gew.-% beträgt.

9. Flüssigkristallines Medium nach Anspruch 3, **dadurch gekennzeichnet, dass** es mindestens eine Verbindung ausgewählt aus den Formeln IIIa bis IIId enthält: 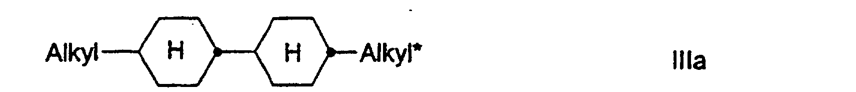 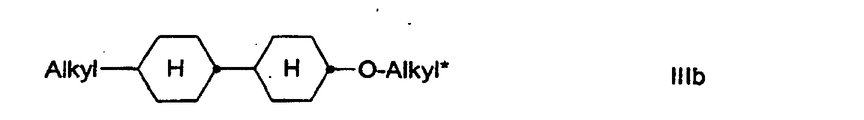 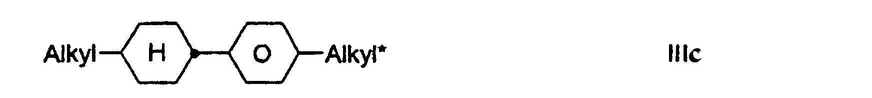 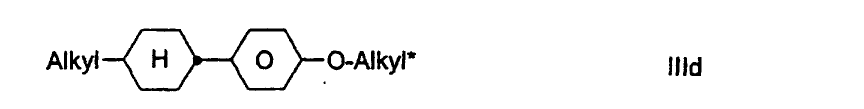 worin
Alkyl und Alkyl* jeweils unabhängig voneinander einen geradkettigen Alkylrest mit 1-6 C-Atomen,
bedeuten.

10. Flüssigkristallines Medium nach Anspruch 9, **dadurch gekennzeichnet, dass** es mindestens eine Verbindung der Formel IIIa und/oder mindestens eine Verbindung der Formel IIIb enthält.

11. Flüssigkristallines Medium nach einem der Ansprüche 1 bis 10, **dadurch gekennzeichnet, dass** es zusätzlich eine oder mehrere Verbindungen der Formeln 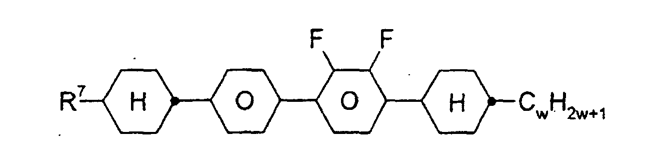 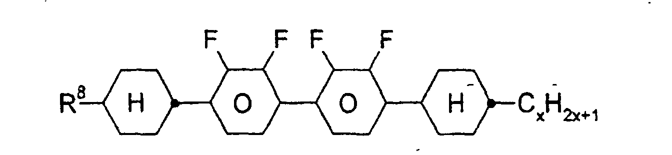 worin
R⁷ und R⁸ jeweils unabhängig voneinander eine der in Anspruch 1 für R¹¹, R¹² und R²¹ angegebenen Bedeutung haben, und
w und x jeweils unabhängig voneinander 1 bis 6
bedeuten,
enthält.

12. Flüssigkristallines Medium nach einem der Ansprüche 1 bis 11, **dadurch gekennzeichnet, dass** es im wesentlichen aus
10-40 Gew.-% einer oder mehrerer Verbindungen der Formel I1.
5-30 Gew.-% einer oder mehrerer Verbindungen der Formel I2
und
20-70 Gew.-% einer oder mehrerer Verbindungen der Formel II
besteht.

13. Elektrooptische Anzeige mit einer Aktivmatrix-Addressierung basierend auf dem ECB- oder dem IPS-Effekt, **dadurch gekennzeichnet, dass** sie als Dielektrikum ein flüssigkristallines Medium nach einem der Ansprüche 1 bis 12 enthält.

## Claims

1. Liquid-crystalline medium based on a mixture of polar compounds of negative dielectric anisotropy, which comprises at least one compound of the formula I1 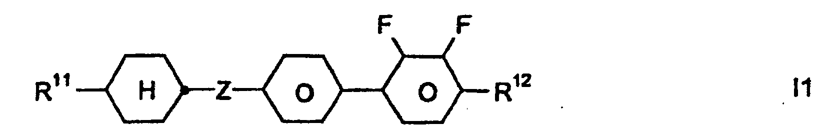 and at least one compound of the formula 12 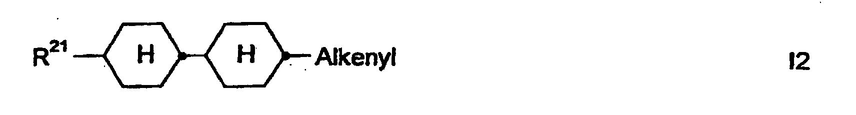 in which
R¹¹, R¹² and R²¹ are each, independently of one another, an alkyl or alkenyl radical having up to 15 carbon atoms which is unsubstituted, monosubstituted by CN or CF₃ or at least monosubstituted by halogen, where, in addition, one or more CH₂ groups in these radicals may each, independently of one another, be replaced by -O-, -S-, 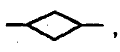 -C≡C-, -CO-, -CO-O-, -O-CO- or -O-CO-O- in such a way that O atoms are not linked directly to one another,
Z is -C₂H₄-, -CH=CH-, -CF₂O-, -OCF₂- or a single bond,and
alkenyl is a straight-chain alkenyl radical having 2-6 carbon atoms,
**characterised in that** it comprises at least one compound of the formula I2ab 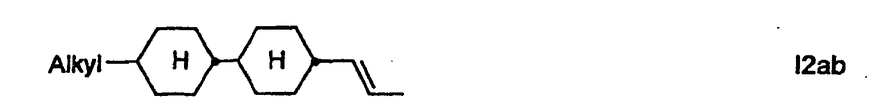 in which alkyl is a straight-chain alkyl radical having 2-6 carbon atoms.

2. Medium according to Claim 1, **characterised in that** it additionally comprises one or more compounds of the formula II 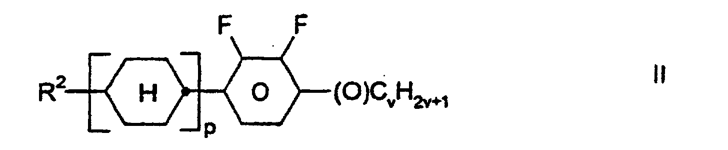 in which
R² is as defined for R¹¹, R¹² and R²¹,
p is 1 or 2, and
v is from 1 to 6.

3. Medium according to Claim 1 or 2, **characterised in that** it additionally comprises one or more compounds of the formula III: 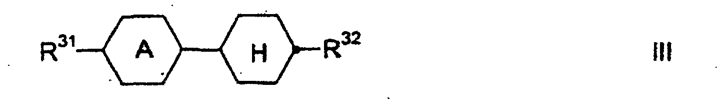 in which
R³¹ and R³² are each, independently of one another, a straight-chain alkyl or alkoxy radical having 1-12 carbon atoms, and

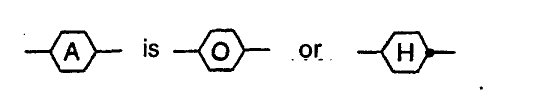

4. Medium according to at least one of Claims 1 to 3, **characterised in that** it consists of three, four or more compounds selected from the formulae II1and I2.

5. Medium according to one of Claims 1 to 4, **characterised in that** the proportion of compounds of the formula I1 in the mixture as a whole is at least 10% by weight.

6. Medium according to one of Claims 1 to 5, **characterised in that** the proportion of compounds of the formula I2 in the mixture as a whole is at least 5% by weight.

7. Medium according to one of Claims 1 to 6, **characterised in that** the proportion of compounds of the formula II in the mixture as a whole is at least 20% by weight.

8. Medium according to one of Claims 1 to 7, **characterised in that** the proportion of compounds of the formula III in the mixture as a whole is at least 5% by weight.

9. Liquid-crystalline medium according to Claim 3, **characterised in that** it comprises at least one compound selected from the formulae IIIa to IIId: 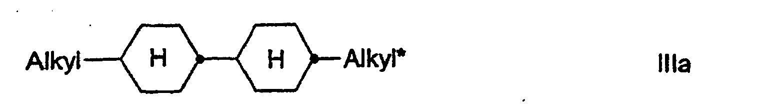 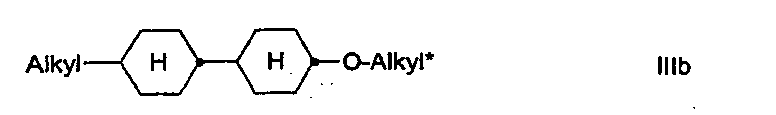 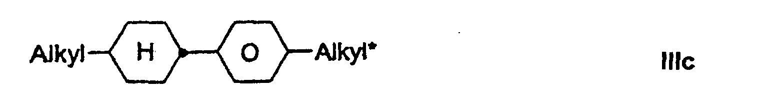 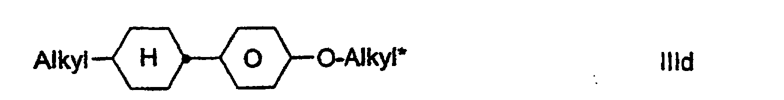 in which
alkyl and alkyl* are each, independently of one another, a straight-chain alkyl radical having 1-6 carbon atoms.

10. Liquid-crystalline medium according to Claim 9, **characterised in that** it comprises at least one compound of the formula IIIa and/or at least one compound of the formula IIIb.

11. Liquid-crystalline medium according to one of Claims 1 to 10, **characterised in that** it additionally comprises one or more compounds of the formulae 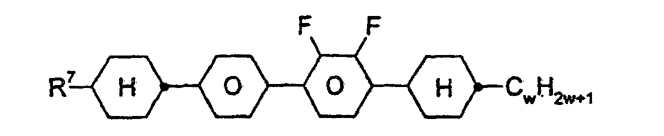 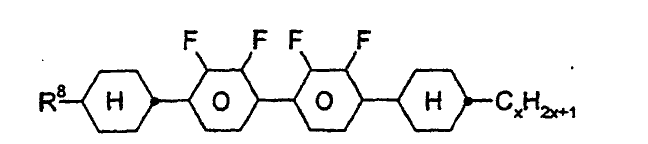 in which
R⁷ and R⁸ are each, independently of one another, as defined for R¹¹, R¹² and R²¹ in Claim 1, and
w and x are each, independently of one another, from 1 to 6.

12. Liquid-crystalline medium according to one of Claims 1 to 11, **characterised in that** it essentially consists of
10-40% by weight of one or more compounds of the formula I1
5-30% by weight of one or more compounds of the formula I2
and
20-70% by weight of one or more compounds of the formula II.

13. Electro-optical display having active-matrix addressing based on the ECB or IPS effect, **characterised in that** it contains, as dielectric, a liquid-crystalline medium according to one of Claims 1 to 12.

## Revendications

1. Milieu cristallin liquide à base d'un mélange de composés polaires ayant une anisotropie diélectrique négative, contenant au moins un composé de formule I1 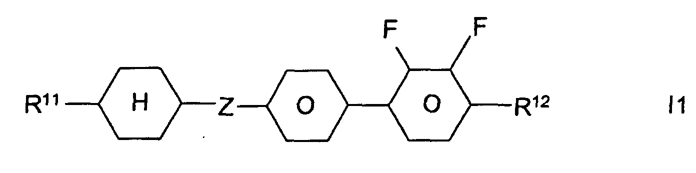 et au moins un composé de formule 12 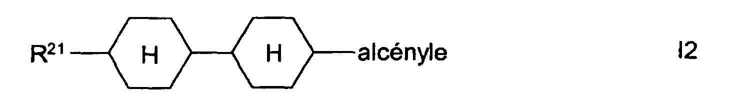 où
R¹¹, R¹² et R²¹ représentent, indépendamment les uns des autres, un reste alkyle ou alcényle comportant jusqu'à 15 atomes de C, non substitué, monosubstitué par CN ou CF₃ ou au moins monosubstitué par un halogène, un ou plusieurs groupes CH₂ dans ces restes pouvant être également remplacés, indépendamment les uns des autres, par -O-, -S-, 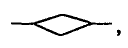 -C≡ C-, -CO-, -CO-O-, -O-CO- ou -O-CO-O-, de telle façon que les atomes d'O ne soient pas directement reliés entre eux,
Z représente -C₂H₄-, -CH=CH-, -CF₂O-, -OCF₂- ou une liaison simple et
alcényle un reste alcényle à chaîne droite comportant 2 à 6 atomes de C,
**caractérisé en ce qu'**il contient au moins un composé de formule I2ab. 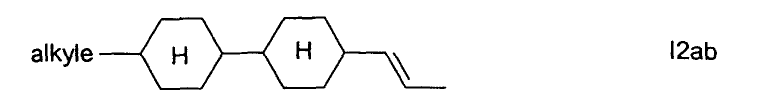 où l'alkyle est un reste alkyle à chaîne droite comportant 2 à 6 atomes de C.

2. Milieu selon la revendication 1, **caractérisé en ce qu'**il contient en plus un ou plusieurs composés de formule II 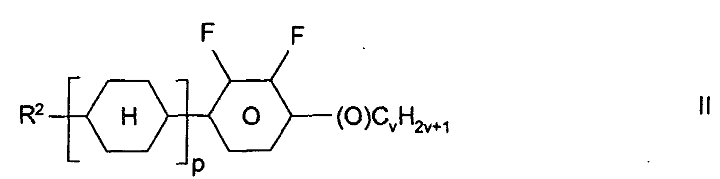 où
R² a la signification indiquée pour R¹¹, R¹² et R²¹,
p est égal à 1 ou 2 et
v à 1 à 6.

3. Milieu selon la revendication 1 ou 2, **caractérisé en ce qu'**il contient en plus un ou plusieurs composés de formule III 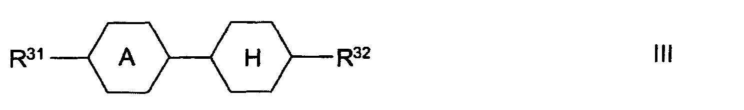 où
R³¹ et R³² représentent, indépendamment l'un de l'autre, un reste alkyle ou alcoxy à chaîne droite comportant 1 à 12 atomes de C et

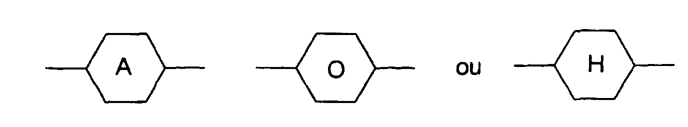

4. Milieu selon au moins l'une des revendications 1 à 3, **caractérisé en ce qu'**il est constitué de trois ou quatre composés ou davantage choisis dans les formules I1 et 12.

5. Milieu selon l'une des revendications 1 à 4, **caractérisé en ce que** la proportion des composés de formule I1 dans la totalité du mélange est d'au moins 10 % en poids.

6. Milieu selon l'une des revendications 1 à 5, **caractérisé en ce que** la proportion des composés de formule 12 dans la totalité du mélange est d'au moins 5 % en poids.

7. Milieu selon l'une des revendications 1 à 6, **caractérisé en ce que** la proportion des composés de formule II dans la totalité du mélange est d'au moins 20 % en poids.

8. Milieu selon l'une quelconque des revendications 1 à 7, **caractérisé en ce que** la proportion des composés de formule III dans la totalité du mélange est d'au moins 5 % en poids.

9. Milieu cristallin liquide selon la revendication 3, **caractérisé en ce qu'**il contient au moins un composé choisi dans les formules IIIa et IIId 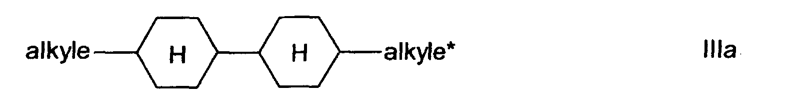 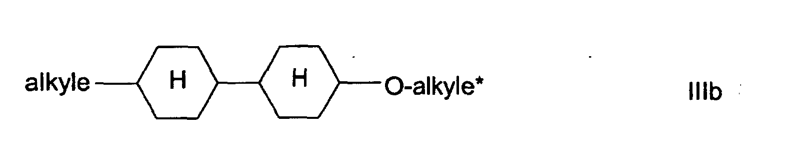 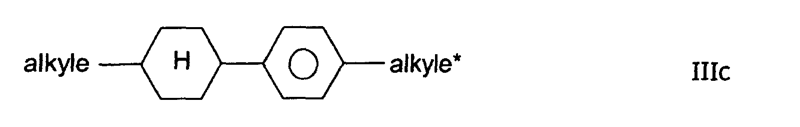 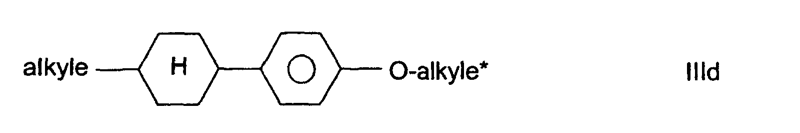 où
alkyle et alkyle* représentent, indépendamment l'un de l'autre, un reste alkyle à chaîne droite comportant 1 à 6 atomes de C.

10. Milieu cristallin liquide selon la revendication 9, **caractérisé en ce qu'**il contient au moins un composé de formule IIIa et/ou au moins un composé de formule IIIb.

11. Milieu cristallin liquide selon l'une des revendications 1 à 10, **caractérisé en ce qu'**il contient en plus un ou plusieurs composés de formules 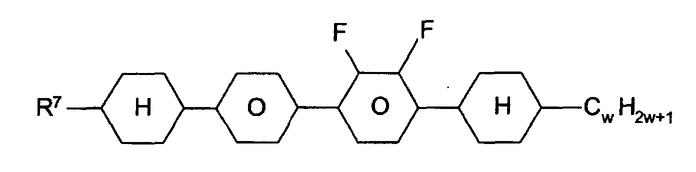 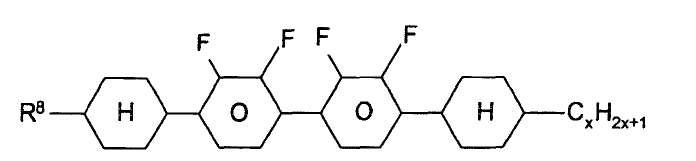 où
R⁷ et R⁸ ont, indépendamment l'un de l'autre, la signification indiquée dans la revendication 1 pour R¹¹, R¹² et R²¹ et
w et x sont compris, indépendamment l'un de l'autre, entre 1 et 6.

12. Milieu cristallin liquide selon l'une des revendications 1 à 11, **caractérisé en ce qu'**il est essentiellement constitué de 10 à 40 % en poids d'un ou plusieurs composés de formule I1, 5 à 30 % en poids d'un ou plusieurs composés de formule 12 et 20 à 70 % en poids d'un ou plusieurs composés de formule II.

13. Afficheur électro-optique comportant un adressage à matrice active basé sur l'effet ECB ou IPS, **caractérisé en ce qu'**il contient comme diélectrique un milieu cristallin liquide selon l'une des revendications 1 à 12.
